# EUROPÄISCHE PATENTSCHRIFT

(11) **EP 0 805 771 B1**
(45) Veröffentlichungstag und Bekanntmachung des Hinweises auf die Patenterteilung: **10.04.2002**
(21) Anmeldenummer: 96939917.9
(22) Anmeldetag: 25.11.1996
(51) Int. Cl.: B65G 47/71, B65G 47/76, F15B 11/04, F15B 11/12

(54) **VORRICHTUNG ZUM AUSLEITEN VON EINZELNEN ODER MEHREREN ROTATIONSSYMMETRISCHEN BEHÄLTERN AUS EINEM UNTER STAUDRUCK GEFÖRDERTEN STROM DER ROTATIONSSYMMETRISCHEN BEHÄLTER UND ZYLINDER MIT GESTEUERT AUSFAHRBAREM KOLBEN**
DEVICE FOR SELECTING ONE OR MORE ROTATIONALLY SYMMETRICAL CONTAINERS FROM A STREAM OF ROTATIONALLY SYMMETRICAL CONTAINERS CONVEYED UNDER PRESSURE FROM BEHIND, AND CYLINDER WITH CONTROLLED PLUNGER
DISPOSITIF POUR SELECTIONNER UN OU PLUSIEURS CONTENANTS A SYMETRIE DE ROTATION DANS UN FLUX DE TELS CONTENANTS TRANSPORTES SOUS L'EFFET D'UNE PRESSION DYNAMIQUE ET VERIN AVEC PISTON A DEPLACEMENT COMMANDE

(30) Priorität: 24.11.1995 DE 29518636 U
(43) Veröffentlichungstag der Anmeldung: 12.11.1997
(73) Patentinhaber: HEUFT SYSTEMTECHNIK GMBH, 56659 Burgbrohl (DE)
(72) Erfinder: HEUFT, Bernhard, D-56659 Burgbrohl (DE); GOLLER, Hans-Ulrich, D-53173 Bonn-Bad Godesberg (DE)
(74) Vertreter: Abitz, Walter, Dr.-Ing.
(86) Internationale Anmeldenummer: EP9605191
(87) Internationale Veröffentlichungsnummer: WO9719873

(56) Entgegenhaltungen:
- EP-A- 0 003 111
- CH-A- 449 513
- DE-A- 4 132 811
- DE-B- 1 217 865
- US-A- 2 515 871
- US-A- 2 999 001
- OLEODINAMICA, PNEUMATICA, Bd. 18, Nr. 1, Januar 1977, MILANO IT, Seite 61 XP002029717 "elettrovalvole modulari"

## Beschreibung

Die Erfindung betrifft eine Vorrichtung zum Ausleiten einzelner oder mehrerer rotationssymmetrischer Behälter aus einem unter Staudruck geförderten Strom der rotationssymmetrischen Behälter. Die Vorrichtung weist einen ersten Transporteur für den Strom der Behälter und einen zweiten Transporteur für den Abtransport der ausgeleiteten Behälter auf, wobei der zweite Transporteur an einer Ausleitstelle von dem ersten Transporteur abzweigt. Die Vorrichtung weist ferner eine Einrichtung zum Überleiten der auszuleitenden Behälter vom ersten Transporteur auf den zweiten Transporteur auf. Da die Behälter unter Staudruck gefördert werden, sind rechts und links vom ersten Transporteur Geländer vorgesehen, die die Behälter auf dem ersten Transporteur halten.

Das Ausleiten einzelner Behälter aus einem unter Staudruck geförderten Strom derartiger Behälter ist bisher ausschließlich mittels Sternräder bewerkstelligt worden.

Zum Ausleiten von Behältern, die nicht unter Staudruck befördert werden und daher einen gegenseitigen Abstand aufweisen, ist eine Vielzahl von Vorrichtungen bekannt, z.B. die segmentierte Ausleitweiche und die Ablenk-Gasdüsen gemäß EP-A-0 003 111. Diese Vorrichtungen eignen sich jedoch nicht zum Ausleiten von Behälter, die unter Staudruck gefördert werden.

Aus US-A-2 515 871 ist eine Vorrichtung nach dem Oberbegriff des Patenanspruchs 1 bekannt. Die Ablenkschieber sind hierbei in den Trennkeil integriert und werden von dessen Spitze schräg entgegen der Bewegungsrichtung der Behälter ausgefahren. Die ankommenden Behälter haben einen gegenseitigen Abstand.

Der Erfindung, wie sie in Patenanspruch 1 definiert ist, liegt die Aufgabe zugrunde, das Ausleiten von einzelnen Behältern aus einem unter Staudruck geförderten Strom derartiger Behälter mittels einer möglichst einfach aufgebauten und zuverlässig arbeitenden Vorrichtung zu ermöglichen, wobei der Strom der Behälter auf dem ersten Transporteur, z.B. einem Förderband oder Gliederkettenförderer, verbleibt.

Der erste Transporteur knickt an der Ausleitstelle unter einem spitzen Winkel nach der einen Seite ab und der zweite Transporteur zweigt an der Ausleitstelle unter einem spitzen Winkel nach der anderen Seite vom ersten Transporteur ab, so daß zwischen dem ersten und dem zweiten Transporteur ein Trennkeil gebildet wird. Der erste Ablenkschieber ist zwischen einer zurückgezogenen Stellung, in der er sich außerhalb der Bewegungsbahn der Behälter befindet, und einer ausgefahrenen Stellung verschiebbar, in der er sich auf der Seite der Abzweigung des zweiten Transporteurs vom Anfang der Ausleitstelle zur Spitze des Trennkeils erstreckt. Der zweite Ablenkschieber ist zwischen einer zurückgezogenen Stellung, in der er sich außerhalb der Bewegungsbahn der Behälter befindet, und einer ausgefahrenen Stellung verschiebbar, in der er sich auf der Seite der Abwinklung des ersten Transporteurs vom Anfang der Ausleitstelle in Richtung der Spitze des Trennkeils über mindestens etwa die Hälfte der Breite des ersten Transporteurs erstreckt.

Befindet sich der erste Ablenkschieber in seiner ausgefahrenen Stellung und der zweite Ablenkschieber in seiner zurückgezogenen Stellung, so werden die Behälter auf dem ersten, abknickenden Transporteur befördert. Wenn ein auszuleitender Behälter an der Ausleitstelle ankommt, was z.B. durch eine dort befindliche Triggerschranke festgestellt wird, so wird der erste Ablenkschieber zurückgezogen und der zweite Ablenkschieber ausgefahren, so daß der auszuleitende Behälter durch die nachfolgenden Behälter auf den abzweigenden, zweiten Transporteur geschoben wird. Unmittelbar hinter dem auszuleitenden Behälter wird der erste Ablenkschieber wieder ausgefahren und der zweite Ablenkschieber wird gleichzeitig zurückgezogen, so daß die nachfolgenden Behälter wieder auf dem ersten Transporteur weiterbewegt werden.

Wird ein oder mehrere Behälter aus dem Behälterstrom ausgeleitet, so wird die entstandene Lücke wegen des bestehenden Staudruckes sofort geschlossen. Durch das Schließen der Lücke ergibt sich kurzzeitig eine starke Beschleunigung und eine Druckschwankung, die sich in Transportrichtung und entgegen der Transportrichtung ausbreitet. Um zu verhindern, daß durch die ruckartige Bewegung der Behälter Fehler bei der elektronischen Verfolgung der einzelnen Gegenstände auftreten ist es sinnvoll, eine Einrichtung zur Dämpfung dieser Druckschwankung vorzusehen. Eine solche Einrichtung kann in einem dünnen auf dem ersten Transporteur nach der Ausleitstelle angeordneten Blech bestehen, über welches die Behälter geschoben werden.

Die erfindungsgemäße Vorrichtung kann Teil einer Getränkeabfüllanlage sein. Derartige Getränkeabfüllanlagen weisen Stationen auf, in denen die Getränkeflaschen auf Fehlerfreiheit, Sauberkeit und Abwesenheit von Fremdkörpern untersucht werden. Vorrichtungen zur Bodeninspektion und zur Seitenwandinspektion unter Staudruck werden in den gleichzeitig eingereichten PCT-Anmeldungen WO 97/19766 "Verfahren und Vorrichtung zum Transportieren von Behältern vorbei an einer Einrichtung zum Inspizieren des Bodens der Behälter" und WO 97/19853 "Verfahren und Vorrichtung zum Drehen von rotationssymmetrischen Behältern, wie Flaschen, während des Transports unter Staudruck" beschrieben. Dadurch, daß sowohl die Bodeninspektion als auch die Seitenwandinspektion und gemäß der vorliegenden Erfindung das Ausleiten einzelner dabei als defekt festgestellter Behälter unter Staudruck erfolgen, ergibt sich für die gesamte Anlage eine wesentliche Vereinfachung, da die üblicherweise eingesetzten Füllmaschinen Staudruck im Einlaufbereich erfordern. Das bisher erforderliche Vereinzeln der Behälter, so daß sie einen gegenseitigen Abstand aufweisen, vor den Vorrichtungen zur Bodeninspektion und Seitenwandkontrolle und das anschließend wieder erforderliche Aufbauen des Staudrucks entfällt dadurch.

Die Zuordnung des Ergebnisses einer Bodeninspektion oder einer Seitenwandinspektion zu den einzelnen Behältern erfolgt mittels eines FIFO-Schieberegisters, dessen Inhalt entsprechend der Weiterbewegung der Behälter auf dem ersten Transporteur weitergetaktet wird, bis der jeweilige Behälter an einer unmittelbar vor der Ausleitstelle angeordneten Lichtschranke ankommt. Die Weiterbewegung der Behälter auf dem ersten Transporteur kann dabei mittels eines Sternrades, das mit dem Strom der Behälter im Eingriff steht, einer CCD-Zeilenkamera, einer Reihenanordnung von Photodioden oder durch Geschwindigkeitsmessung mittels Dopplereffekt oder dergleichen, ermittelt werden. Diese Art der Zuordnung des Prüfergebnisses zu den einzelnen Behältern ist aus Anlagen bekannt, bei denen die Gegenstände mit gegenseitigem Abstand befördert werden.

Vorzugsweise ist der Trennkeil in Längsrichtung geteilt und sind die beiden Teile jeweils in Richtung ihrer Außenkanten in Richtung auf den ersten bzw. zweiten Ablenkschieber hin verschiebbar. Der jeweilige Teil des Trennkeils und der Ablenkschieber treffen sich etwa in der Mitte des ersten bzw. zweiten Transporteurs. Dadurch wird eine präzisere Ausleitung von Behältern und ein höherer Durchsatz an Behältern ermöglicht.

Ein Arbeiten der Ausleitvorrichtung bei höherem Behälterdurchsatz wird auch dadurch ermöglicht, daß unmittelbar stromaufwärts der Ablenkschieber verschwenkbare Klappen im Geländer des ersten Transporteurs angebracht werden, die jedem Behälter bereits einen Impuls in Richtung des abknickenden Teils des ersten Transporteurs bzw. in Richtung des abzweigenden zweiten Transporteurs erteilen, wodurch die Richtungsänderung beim Auftreffen der Behälter auf den ersten bzw. zweiten Ablenkschieber weniger abrupt ist.

Eine weitere Möglichkeit zur Verbesserung der Ausleitung besteht darin, den Trennkeil an seinem breiten, bewegungsabwärtsseitigen Ende verschwenkbar zu lagern, so daß die Spitze des Trennkeils verschwenkbar ist und dadurch wiederum die Richtungsänderung der Bewegung der einzelnen Behälter kleiner ist.

Die beiden Ablenkschieber werden zweckmäßig durch pneumatische Zylinder ausgefahren. Die Ausfahrgeschwindigkeit entspricht dabei etwa der Geschwindigkeit der vorbeilaufenden Behälter. Es ist daher zweckmäßig, die Ausfahrgeschwindigkeit der pneumatischen Kolben steuern zu können. Vorzugsweise erfolgt dies dadurch, daß doppelwirkende Kolben verwendet werden, wobei der Strömungswiderstand der beim Ausfahren des Kolbens aus dem Raum vor dem Kolben austretenden Luft durch einstellbare Drosseln regulierbar ist. Die Aus- und Einfahrgeschwindigkeit des Kolbens kann auch dadurch gesteuert werden, daß über die Länge des Zylinders verteilt mehrere Entlüftungsanschlüsse vorgesehen sind, die jeweils über ein Ventil gesteuert werden. Wird der Kolben auf einer Seite mit Druckluft beaufschlagt und werden die Anschlüsse auf der anderen Seite des Kolbens zeitlich aufeinanderfolgend geöffnet, so wird der Kolben stufenweise jeweils bis zu dem gerade offenen Anschluß verschoben. Dadurch kann die Fahrstrecke und auch die Fahrgeschwindigkeit des Kolbens gesteuert werden.

Ausführungsbeispiele der Erfindung werden nachfolgend anhand der Zeichnungen erläutert. Es zeigt:
- Fig. 1: eine Ausführungsform der erfindungsgemäßen Vorrichtung mit zwei Ablenkschiebern;
- Fig. 2: eine Ausführungsform der erfindungsgemäßen Vorrichtung mit zwei Ablenkschiebern und zusätzlich einem in Längsrichtung geteilten Trennkeil, wobei jeder der Teile verschiebbar ist;
- Fig. 3: eine Ausführungsform der erfindungsgemäßen Vorrichtung mit zwei Ablenkschiebern und zusätzlich zwei Ablenkklappen;
- Fig. 4: eine Ausführungsform der erfindungsgemäßen Vorrichtung mit zwei Ablenkschiebern und zusätzlich einem verschwenkbaren Trennkeil;
- Fig. 5: in Draufsicht ein Sternrad, das zur Ermittlung der Fördergeschwindigkeit der Behälter neben dem ersten Transporteur angeordnet ist;
- Fig. 6: die erfindungsgemäße Vorrichtung in Verbindung mit einer Zeilenkamera zur Ermittlung der Fördergeschwindigkeit der Behälter sowie mit einer Einrichtung zur Dämpfung von Druckimpulsen;
- Fig. 7: die Zeilenkamera zur Ermittlung der Fördergeschwindigkeit der Behälter in einem Schnitt quer zur Transportrichtung;
- Fig. 8: in einer schematischen Darstellung einen Zylinder mit stufenweise ausfahrbarem Kolben, und
- Fig. 9: in einer schematischen Darstellung einen Zylinder, bei dem die Ausfahrgeschwindigkeit des Kolbens steuerbar ist.

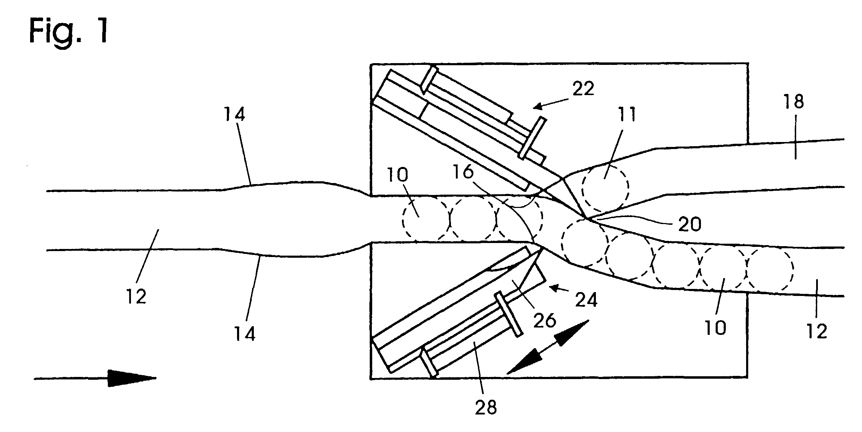

Gemäß Fig. 1 werden Leerflaschen 10 auf einem ersten Transporteur 12, bei dem es sich z.B. um ein Förderband oder einen Gliederkettenförderer handeln kann, unter Staudruck befördert. Durch Geländer 14 werden die Leerflaschen 10 auf dem ersten Transporteur 12 geführt. Der Abstand der beiden Geländer 14 ist 1 bis 10 mm größer als der Durchmesser der Leerflaschen 10. An einer Ausleitstelle 16 knickt der erste Transporteur 12 unter einem Winkel von etwa 30° nach der einen Seite ab, in Fig. 1 nach rechts, und zweigt ein zweiter Transporteur 18 ebenfalls unter einem Winkel von etwa 30° nach der anderen Seite ab, in Fig. 1 nach links. Zwischen beiden Transporteuren 12, 18 wird dabei ein Trennkeil 20 gebildet.

In der Praxis kann eine derartige Anordnung in der Weise realisiert werden, daß ein Förderband oder ein Gliederkettenförderer, dessen Breite etwa dem 3- oder 4fachen Durchmesser der Leerflaschen 10 entspricht eingesetzt wird. Die Leerflaschen 10 werden durch die Geländer 14 auf dem Gliederkettenförderer geführt. Bei der Abknickung läuft der Gliederkettenförderer geradeaus weiter und nur das Geländer 14 ist abgeknickt. Die Leerflaschen 10 verlaufen also im Bereich der Abknickung leicht schräg zur Bewegungsrichtung des Gliederkettenförderers. Ebenso werden die Leerflaschen auf dem abzweigenden, zweiten Transporteur 18 durch das Geländer 14 schräg auf dem Gliederkettenförderer verschoben. Zweckmäßig überlappen sich an der Ausleitstelle drei parallel zueinander laufende Gliederkettenförderer, wobei die Leerflaschen 10 auf dem mittleren Gliederkettenförderer herangeführt werden und durch das abknickende Geländer 14 auf den rechts daneben laufenden Gliederkettenförderer verschoben werden, während sie durch das nach der anderen Richtung abzweigende Geländer auf den links daneben verlaufenden Gliederkettenförderer verschoben werden. Es ist auch möglich, die Behälter mittig auf zwei Gliederkettenförderern stehend zur Ausleitstelle 16 zu führen und dort mittels der erfindungsgemäßen Vorrichtung auf einen der beiden Transporteure 12, 18 zu verschieben. Der zweite Transporteur 18 braucht kein linearer Transporteur zu sein und kann auch ein Drehteller sein.

An der Ausleitstelle 16, d.h. am Beginn der Gabelung der beiden Transporteure 12, 18 sind ein erster Ablenkschieber 22 und ein zweiter Ablenkschieber 24 auf den gegenüberliegenden Seiten des ersten Transporteurs 12 angeordnet. Jeder der beiden Ablenkschieber 22, 24 besteht aus einem verschiebbar gelagerten, vorne zugespitzten Stab 26, der durch einen pneumatischen Zylinder 28 ausgefahren und zurückgezogen werden kann. Der erste Ablenkschieber 22 ist auf der Seite des ankommenden ersten Transporteurs 12 angeordnet, nach der der zweite Transporteur 18 abzweigt, und der zweite Ablenkschieber 24 ist auf der Seite des ankommenden ersten Transporteurs 12 angeordnet, nach der der erste Transporteur 12 abbiegt. In ihrer zurückgezogenen Stellung befinden sich die Ablenkschieber 22, 24 außerhalb des ersten und des zweiten Transporteurs 12, 18. Die beiden Ablenkschieber 22, 24 sind in Richtung zu dem Trennkeil 20 hin ausfahrbar und erstrecken sich in ihrer ausgefahrenen Stellung über mindestens die halbe Breite des zweiten bzw. ersten Transporteurs 18, 12. Insbesondere für den zweiten Ablenkschieber 24 reicht es im allgemeinen aus, wenn er nur bis etwa zur Mitte der Bahn des ersten Transporteurs 12 ausfahrbar ist. Der erste Ablenkschieber 22 überbrückt in seiner ausgefahrenen Stellung die Lücke im Geländer 14, die sich durch die Abzweigung des zweiten Transporteurs 18 ergibt, so daß bei ausgefahrenem ersten Ablenkschieber 22 alle Leerflaschen 10 auf dem ersten Transporteur 12 weiterbefördert werden. Trifft an der Ausleitstelle 16 eine defekte Leerflasche 11 ein, die ausgeleitet werden soll, so fährt unmittelbar nach der letzten vorausgehenden guten Flasche der zweite Ablenkschieber 24 aus, so daß die defekte Leerflasche 11 sich nicht auf dem ersten Transporteur 12 weiterbewegen kann. Gleichzeitig wird der erste Ablenkschieber 22 zurückgezogen, so daß die auszuleitende Leerflasche 11 durch den von den nachfolgenden Leerflaschen 10 ausgeübten Staudruck auf den zweiten Transporteur geschoben wird. Wenn die nachfolgende Leerflasche ebenfalls auszuleiten ist, so verbleibt der erste Ablenkschieber 22 in seiner zurückgezogenen Stellung und der zweite Ablenkschieber 24 in seiner ausgefahrenen Stellung. Wenn die folgende Leerflasche dagegen gut ist und auf dem ersten Transporteur 12 weitertransportiert werden soll, so wird der erste Ablenkschieber 22 unmittelbar nach der ausgeleiteten Leerflasche 11 wieder ausgefahren und wird der zweite Ablenkschieber 24 zurückgezogen, so daß die Bahn auf dem ersten Transporteur 12 wieder frei ist.

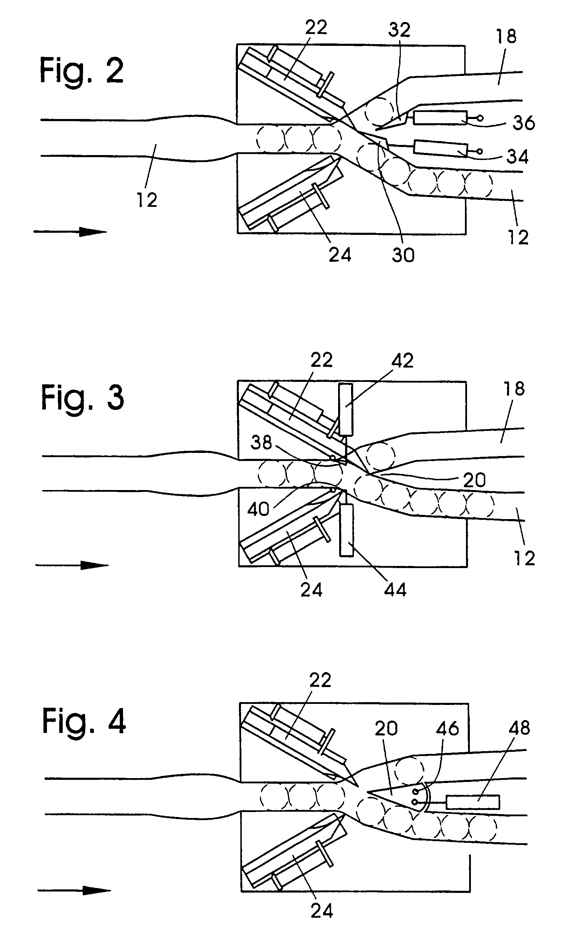

Bei der in Fig. 2 gezeigten Ausführungsform ist statt eines starren Trennkeils 20 ein aus zwei beweglichen Spitzen 30, 32 bestehender Trennkeil 20 verwendet. Durch pneumatische Zylinder 34, 36 sind die Spitzen 30, 32 auf den ersten bzw. zweiten Ablenkschieber 22, 24 hin verschiebbar, so daß sich der Ausfahrweg der Ablenkschieber 22, 24 verkürzt. Die Spitzen 30, 32 sind bis zur Mitte des ersten bzw. zweiten Transporteurs 12, 18 verschiebbar, so daß sich der Fahrweg der Ablenkschieber 22, 24 auf die Hälfte reduziert. Dadurch verringert sich die Fahrzeit, wodurch ein höherer Flaschendurchsatz ermöglicht wird.

Bei dem Ausführungsbeispiel von Fig. 3 sind unmittelbar vor oder an der Ausleitstelle 16 seitlich neben dem ersten Transporteur 12 eine erste und zweite Ablenkklappe 38, 40 angeordnet. Die Ablenkklappen 38, 40 sind an ihrem hinteren Ende verschwenkbar gelagert und ihr vorderes in Transportrichtung zeigendes Ende kann durch Pneumatikzylinder 42, 44 verschwenkt werden. Kurz bevor ein Ablenkschieber 22, 24 ausgefahren wird oder gleichzeitig damit, wird die sich auf der gleichen Seite des ersten Transporteurs 12 unmittelbar dahinter befindliche Ablenkklappe 38 bzw. 40 durch den zugeordneten Zylinder 42 bzw. 44 so angesteuert, daß sie der nächsten Flasche einen Impuls von der Spitze des Ablenkschiebers 22, 24 weg erteilt, wodurch Platz für den ausfahrenden Ablenkschieber 22, 24 geschaffen wird. Für den Ausfahrzeitpunkt eines Ablenkschiebers 22, 24 besteht dadurch ein größeres zeitliches Fenster. Da z.B. ein auszuleitender Behälter 11 durch die zweite Ablenkklappe 40 bereits einen Impuls in Richtung des zweiten Transporteurs 18 erhalten hat, kann der zweite Ablenkschieber 24 auch noch relativ spät ausgefahren werden, ohne daß die Gefahr besteht, daß der zweite Ablenkschieber 24 auf eine Leerflasche 10 auftrifft.

Bei dem Ausführungsbeispiel von Fig. 4 ist der Trennkeil 20 an seinem vorderen, breiten Ende um eine Achse 46 verschwenkbar gelagert. Die Verschwenkung erfolgt durch einen Pneumatikzylinder 48. Solange keine Leerflasche auf den zweiten Transporteur 18 abgeleitet wird, befindet sich der Trennkeil 20 in einer leicht zum zweiten Transporteur 18 hin verschwenkten Lage, so daß die Leerflaschen 10 am Trennkeil 20 vorbei auf dem ersten Transporteur 12 weitergefördert werden können. Tritt eine auszuleitende Leerflasche 11 in die Ausleitstelle 16 ein, so wird der Trennkeil 20 vom zweiten Transporteur 18 weg zum ersten Transporteur 12 verschwenkt, wodurch der Ausfahrweg für den zweiten Ablenkschieber 24 etwas verkürzt wird. Dies ist eine weitere Möglichkeit, um den Leerflaschendurchsatz zu erhöhen.

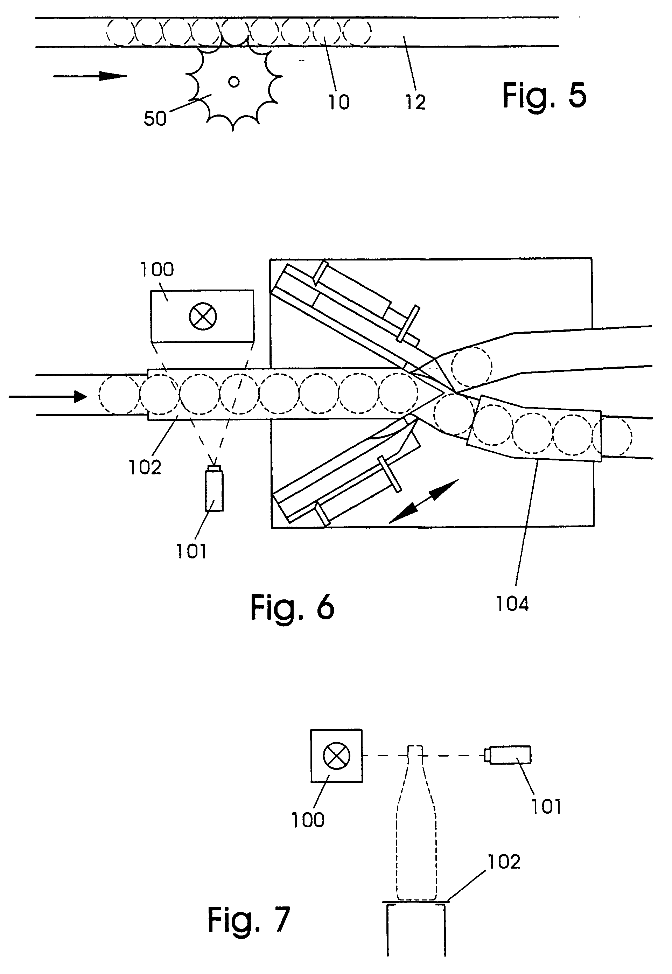

Die Ausfahrgeschwindigkeit der beiden Ablenkschieber 22, 24 entspricht etwa der Geschwindigkeit der Leerflaschen 10, so daß die Spitze der Ablenkschieber 22, 24 beim Ausfahren sich gleichsam mit den Leerflaschen 10 weiterbewegend zwischen diese schiebt. Da die Geschwindigkeit der Leerflaschen 10 beim Fördern unter Staudruck sehr stark variieren kann und kleiner ist als die Geschwindigkeit, mit der der erste Förderer 12 angetrieben wird, ist es zweckmäßig, die Geschwindigkeit zu erfassen, mit der sich die Leerflaschen 10 bewegen. Dazu kann gemäß Fig. 5 vor der Ausleitstelle 16 neben dem ersten Transporteur 12 ein Sternrad 50 angeordnet werden, das mit seinen Zacken zwischen die Leerflaschen 10 eingreift und von den vorbeilaufenden Leerflaschen 10 mitgenommen wird. Aus der Drehgeschwindigkeit des Sternrads 50 kann dann die Geschwindigkeit der Leerflaschen 10 abgeleitet werden und dementsprechend die Ausfahrgeschwindigkeit der ersten und zweiten Ablenkschieber 22, 24 gesteuert werden. Gleichzeitig können von der Drehung des Sternrades 50 Taktimpulse für das Weitertakten des Ergebnisses einer Boden- oder Seitenwandinspektion in einem FIFO-Schieberegister abgeleitet werden, so daß jeweils das zu einer bestimmten Leerflasche gehörende, das Inspektionsergebnis enthaltende Steuersignal vorliegt, wenn die betreffende Leerflasche eine unmittelbar vor der Ausleitstelle 16 angeordnete Lichtschranke durchfährt, mittels der ein Ausleitvorgang iniziiert wird, falls diese Leerflasche 10 bei der Bodeninspektion oder der Seitenwandinspektion als defekt erkannt wurde.

Alternativ ist eine Messung der Transportgeschwindigkeit der Flaschen mittels einer Zeilenkamera 101 anstelle des Sternrades möglich. Die Zeilenkamera wird seitlich an der Transporteinrichtung gegenüber einer Beleuchtungsquelle 100 in Höhe der Flaschenmündung angeordnet. Aus der Abfolge der Signale der Kamera wird mittels einer Mikroprozessorschaltung die Transportgeschwindigkeit errechnet (Fig. 6 und 7). Der Behälterstrom kann, im Falle der Ausleitung von Behältern aufgrund der schwankenden Druckverhältnisse stark beschleunigt werden. Gegebenenfalls können hierdurch Fehlmessungen erfolgen. Diesem Verhalten kann entgegengewirkt werden, wenn man dem Behälterstrom im Bereich zwischen Zeilenkamera und Ausleitpunkt einen leichten mechanischen Widerstand als Dämpfungselement entgegensetzt. Dies kann beispielsweise durch ein dünnes, auf dem Transporteur angeordneten Blech 102, über welches die Behälter rutschen, realisiert werden (Fig. 6).

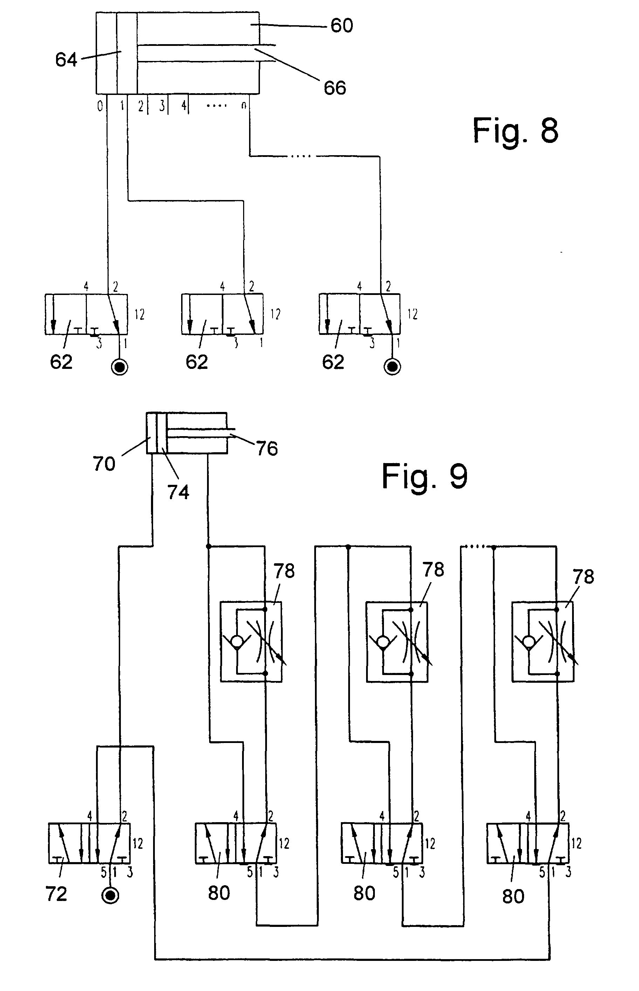

Fig. 8 zeigt schematisch einen Pneumatikzylinder 60 mit mehreren über seine Länge verteilten Anschlüssen 0, 1, 2 ...n. Jeder Anschluß ist mit einem eigenen Steuerventil 62 verbunden. Ein Kolben 64 mit einer Kolbenstange 66 ist in dem Zylinder 60 verschiebbar. Soll der Kolben 64 in Fig. 8 von seiner linken Endposition zu seiner rechten Endposition verschoben werden, so wird der Anschluß 0 über sein Steuerventil 62 mit einer Druckluftquelle verbunden, während die Steuerventile 62 der anderen Anschlüsse geschlossen werden. Der Kolben 64 kann dann nicht fahren, da Luft auf der Kolbenstangenseite nicht entweichen kann. Es wird dann der Anschluß 1 über sein Steuerventil 62 entlüftet, wodurch sich der Kolben 64 nach rechts bewegt, bis er die Öffnung des Anschlusses 1 verschließt. Das Steuerventil 62 für den Anschluß 1 kann nun geschlossen werden. Da der Kolben die Öffnung des Anschlusses 1 bereits verschlossen hat, ist die Steuerung des Steuerventils 62 zeitunkritisch. Durch Öffnen der nachfolgenden Anschlüsse 2, 3, 4 ...n kann der Kolben 64 stufenweise nach rechts gefahren werden. Durch Schließen von Anschluß 0 und Verbinden von Anschluß n mit Druckluft kann der Kolben 64 anschließend stufenweise nach links bewegt werden, indem die Ventile n-1 bis 1 in umgekehrter Reihenfolge zeitlich gestaffelt entlüftet werden. Man erkennt daraus, daß der Kolben 64 auch in einer Zwischenstellung gehalten werden kann.

Eine andere Möglichkeit zur Steuerung der Kolbengeschwindigkeit ist in Fig. 9 dargestellt, wobei sich innerhalb eines Zylinders 70 ein Kolben 74 mit einer Kolbenstange 76 bewegt. Die linke Seite des Zylinders ist über ein Steuerventil 72 mit einer Druckluftquelle verbindbar, während das rechte Ende des Zylinders 70 über eine Reihe einstellbarer Drosselrückschlagventile 78 abluftseitig gedrosselt ist. Jedes der Drosselrückschlagventile 78 ist mittels eines Steuerventils 80 und einer Bypassleitung überbrückbar. Soll die Kolbenstange mit maximaler Geschwindigkeit ausgefahren werden, so wird die Luft durch das am wenigsten gedrosselte Ventil abgelassen. Die Ausfahrgeschwindigkeit kann verlangsamt werden, indem stärker gedrosselte Ventile 78 in die Abluft geschaltet werden. Es besteht auch die Möglichkeit, anstelle von mehreren umschaltbaren Drosselrückschlagventilen 78, ein Drosselventil einzusetzen, das durch ein Stellglied verstellt wird. Über einen Schrittmotor kann diese Einstellung erfolgen.

Die vorausgehend beschriebenen Zylinder 60, 70 eignen sich insbesondere zum Steuern der Ausfahrgeschwindigkeit der Ablenkschieber 22, 24, wobei durch den Zylinder 60 auch der Ausfahrweg einstellbar ist.

Durch die in den Fig. 8 und 9 gezeigten Zylinder ist es möglich, die Ablenkschieber 22, 24 zunächst mit einer erhöhten Geschwindigkeit auszufahren und dann, wenn sich die Spitze des Ablenkschiebers 22, 24 der Mitte der Transportbahn nähert und die Gefahr besteht, daß die Spitze des Ablenkschiebers 22, 24 mehr oder weniger radial auf einen Behälter 10 trifft und dieser gegebenenfalls zu Bruch geht, die Ausfahrgeschwindigkeit auf etwa die Transportgeschwindigkeit der Behälter 10 zu reduzieren.

## Patentansprüche

1. Vorrichtung zum Ausleiten von einzelnen rotationssymmetrischen Behältern (10) aus einem unter Staudruck geförderten Strom der rotationssymmetrischen Behälter, mit einem ersten Transporteur (12) für den Strom von Behältern und einem zweiten Transporteur (18) für den Abtransport der ausgeleiteten Behälter (11), wobei
- der zweite Transporteur (18) an einer Ausleitstelle (16) von dem ersten Transporteur (12) abzweigt,
- der erste Transporteur (12) an der Ausleitstelle (16) unter einem flachen Winkel abknickt,
- zwischen dem ersten und dem zweiten Transporteur (12, 18) ein Trennkeil (20) angeordnet ist,
- ein erster und ein zweiter ausfahrbarer Ablenkschieber (22, 24) an der Ausleitstelle (16) angeordnet sind und
- bei ausgefahrenem erstem Ablenkschieber (22) die Behälter (10) auf dem ersten Transporteur (12) weiterbefördert werden und zum Ausleiten von Behältern (11) auf den zweiten Transporteur (18) der zweite Ablenkschieber (24) ausgefahren und der erste Ablenkschieber (22) zurückgezogen wird,
**dadurch gekennzeichnet,**
- **daß** der erste Ablenkschieber (22) an der Ausleitstelle (16) neben dem ersten Transporteur (12) auf der Seite der Abzweigung des zweiten Transporteurs (18) angeordnet ist und in Richtung auf die Spitze des Trennkeils (20) hin ausfahrbar ist und
- **daß** der zweite Ablenkschieber (24) an der Ausleitstelle (16) neben dem ersten Transporteur (12) auf der Seite der Abknickung des ersten Transporteurs (12) angeordnet ist und in Richtung zur Spitze des Trennkeils (20) hin ausfahrbar ist.

2. Vorrichtung nach Anspruch 1, **dadurch gekennzeichnet, daß** der Trennkeil (20) in Längsrichtung in zwei Spitzen (30, 32) unterteilt ist, die zum ersten bzw. zum zweiten Ablenkschieber (22, 24) hin ausfahrbar sind.

3. Vorrichtung nach Anspruch 1 oder 2, **gekennzeichnet durch** Ablenkklappen (38, 40), die seitlich neben dem ersten Transporteur (12) an der Ausleitstelle (16) verschwenkbar angeordnet sind und im ausgeschwenkten Zustand den Behältern (10) einen Impuls in Richtung der Abknickung des ersten Transporteurs (12) bzw. in Richtung der Abzweigung des zweiten Transporteurs (18) erteilen.

4. Vorrichtung nach Anspruch 1 oder 3, **dadurch gekennzeichnet, daß** der Trennkeil (20) an seinem vorderen, breiten Ende um eine Achse (46) verschwenkbar gelagert ist.

5. Vorrichtung nach einem der Ansprüche 1 bis 4, **gekennzeichnet durch** ein Sternrad (50), das neben dem ersten Transporteur (12) vor der Ausleitstelle (16) angeordnet ist und in den Strom der Behälter (10) ragt und von diesem in Drehung versetzt wird, so daß er über einen Taktgeber bei jeder Umdrehung eine bestimmte Anzahl von Impulsen an eine Ansteuerelektronik für die Ablenkschieber (22, 24) und gegebenenfalls die Betätigungseinrichtungen für die Spitzen (30, 32) und die Ablenkkappen (38, 40) liefert, um die Ausfahrgeschwindigkeiten dieser Bauteile entsprechend der Transportgeschwindigkeit der Behälter (10) zu steuern.

6. Vorrichtung nach einem der Ansprüche 1 bis 4, **gekennzeichnet durch** eine Lichtquelle (100) und eine Zeilenkamera (101), die auf gegenüberliegenden Seiten des ersten Transporteurs (12) vor der Ausleitstelle (16) angeordnet sind, wobei aus den von der Zeilenkamera (101) erzeugten Signalen die Transportgeschwindigkeit der Behälter (10) ermittelt wird.

7. Vorrichtung nach einem der Ansprüche 1 bis 6, **gekennzeichnet durch** eine auf dem ersten Transporteur (12) angeordnete Einrichtung zur Dämpfung der **durch** das Ausleiten eines oder mehrerer Behälter (10) erzeugten Schwankungen des Staudruckes.

8. Zylinder (60) mit einem in gesteuerter Weise ausfahrbaren Kolben (64), mit einem Anschluß an jedem Ende des Zylinders (60) zum Einleiten von Druckfluid und zum Ableiten von Fluid, **gekennzeichnet durch** eine Mehrzahl von weiteren Anschlüssen, die über die Länge des Zylinders (60) verteilt sind und jeweils einzeln schließbar sind.

9. Zylinder (70) mit darin verschiebbarem Kolben (74) und einem Anschluß an jedem Ende des Zylinders zum Zuführen von Druckfluid und Ableiten von Fluid, **gekennzeichnet durch** mindestens ein Drosselrückschlagventil (78) mit einer dazu parallel verlaufenden Bypassleitung, wobei **durch** ein Steuerventil (80) entweder über das Drosselrückschlagventil (78) oder über die Bypassleitung der Zylinder (70) entlüftet werden kann.

## Claims

1. Apparatus for separating individual rotationally symmetric containers (10) from a stream of rotationally symmetric containers conveyed under back pressure, comprising a first conveyor (12) for the stream of containers and a second conveyor (18) for the removal of the separated containers (11), wherein
- the second conveyor (18) is branching off at a separation point (16) from the first conveyor (12),
- the first conveyor (12) bends at an acute angle at the separation point (16),
- a dividing wedge (20) is disposed between the first and the second conveyor (12, 18),
- a first and a second extendable deflection slide (22, 24) are disposed at the separation point (16) and
- the containers (10) continue to be conveyed on the first conveyor, when the first deflection slide (22) is in its extended position, and the second deflection slide (24) is extended and the first deflection slide (22) is retracted for separating containers (11) onto the second conveyor (18),
**characterised**
- **in that** the first deflection slide (22) is disposed at the separation point (16) next to the first conveyor (12) at the side of branching of the second conveyor (18) and is extensible towards the tip of the dividing wedge (20) and
- that a second deflection slide (24) is disposed at the separation point (16) next to the first conveyor (12) at the side of the bend of the first conveyor (12) and is extensible towards the tip of the dividing wedge (20).

2. Apparatus according to claim 1, **characterised in that** the dividing wedge (20) is subdivided in a longitudinal direction into two tips (30, 32), which are extensible towards the first and towards the second deflection slide (22, 24) respectively.

3. Apparatus according to claim 1 or 2, **characterised by** deflection flaps (38, 40), which are disposed laterally next to the first conveyor (12) at the separation point (16) so as to be capable of swivelling and in their outwardly swivelled state impart to the containers (10) a momentum in the direction of the bend of the first conveyor (12) and in the direction of the branching of the second conveyor (18) respectively.

4. Apparatus according to claim 1 or 3, **characterised in that** the dividing wedge (20) is supported at its front, broad end so as to be capable of swivelling about an axis (46).

5. Apparatus according to any one of claims 1 to 4, **characterised by** a star wheel (50), which is disposed next to the first conveyor (12) upstream of the separation point (16) and projects into the stream of containers (10) and is set in rotation by said stream so that it supplies by means of a clock generator for each revolution a specific number of pulses to an electronic trigger device for the deflection slides (22, 24) and, if applicable, the operating devices for the tips (30, 32) and the deflection flaps (38, 40) in order to control the extension speeds of said elements in accordance with the conveying speed of the containers (10).

6. Apparatus according to any one of claims 1 to 4, **characterised by** a light source (100) and a line scanning camera (101) arranged at opposite sides of the first conveyor (12) upstream of the separation point (16), the conveying speed of the containers (10) being determined from the signals generated by the line scanning camera (101).

7. Apparatus according to any one of claims 1 to 6, **characterised by** an element for damping the variations of the back pressure caused by the separation of one or more containers (10), the element being arranged on the first conveyor (12).

8. Cylinder (60) having a piston (64) extensible in a controlled manner, having a port at either end of the cylinder (60) for the introduction of pressure fluid and for the removal of fluid, **characterised by** a plurality of further ports which are distributed over the length of the cylinder (60) and are each individually closable.

9. Cylinder (70) having a piston (74) displaceable therein and a port at either end of the cylinder for the supply of pressure fluid and the removal of fluid, **characterised by** at least one throttle check valve (78) having a bypass line extending parallel thereto, the cylinder (70) being ventable by a control valve (80) either via the throttle check valve (78) or via the bypass line.

## Revendications

1. Dispositif pour sélectionner des contenants (10) individuels et à symétrie de rotation dans un flux de tels contenants transportés sous l'effet d'une pression dynamique, avec un premier transporteur (12) pour le flux de contenants et un deuxième transporteur (18) pour l'évacuation des contenants sélectionnés (11),
- le deuxième transporteur (18) bifurquant en un point de sélection (16) du premier transporteur (12),
- le premier transporteur (12) faisant un coude au point de sélection (16) en formant un angle plat,
- une cale de séparation (20) étant disposée entre le premier et le deuxième transporteurs (12, 18),
- un premier et un deuxième coulisseaux de déviation extensibles (22, 24) étant disposés au point de sélection (16) et
- les contenants (10) étant réexpédiés sur le premier transporteur (12) lorsque le premier coulisseau de déviation (22) est déployé et le deuxième coulisseau de déviation (24) étant déployé et le premier coulisseau de déviation (22) étant reculé pour la sélection des contenants (11) sur le deuxième transporteur (18),
**caractérisé**
- **en ce que** le premier coulisseau de déviation (22) est disposé au point de sélection (16) à côté du premier transporteur (12) du côté de la bifurcation du deuxième transporteur (18) et peut être déployé en direction de la pointe de la cale de séparation (20) et
- **en ce que** le deuxième coulisseau de déviation (24) est disposé au point de sélection (16) à côté du premier transporteur (12) du côté du coude du premier transporteur (12) et étant déployé en direction de l'extrémité de la cale de séparation (20).

2. Dispositif selon la revendication 1, **caractérisé en ce que** la cale de séparation (20) est subdivisée dans le sens longitudinal en deux extrémités (30, 32), qui peuvent être déployées en direction du premier ou du deuxième coulisseau de déviation (22, 24).

3. Dispositif selon la revendication 1 ou 2, **caractérisé par** des clapets de déviation (38, 40), qui sont disposés de façon à pouvoir pivoter sur le côté près du premier transporteur (12) au point de sélection (16) et qui, lorsqu'ils sont basculés, donnent aux contenants (10) une impulsion en direction du coude du premier transporteur (12) et en direction de la bifurcation du deuxième transporteur (18).

4. Dispositif selon la revendication 1 ou 3, **caractérisé en ce que** la cale de séparation (20) est logée sur son extrémité avant et large de façon à pouvoir basculer autour d'un axe (46).

5. Dispositif selon l'une quelconque des revendications 1 à 4, **caractérisé par** une roue étoile (50) qui est disposée à côté du premier transporteur (12) avant le point de sélection (16) et déborde dans le flux des contenants (10) et est mis en rotation par celui-ci, de sorte qu'il envoie au moyen d'une horloge à chaque rotation un certain nombre d'impulsions à une. électronique de commande pour les coulisseaux de déviation (22, 24) et éventuellement les systèmes de commande pour les extrémités (30, 32) et les clapets de déviation (38, 40), afin de contrôler les vitesses de déploiement de ces pièces de construction en fonction de la vitesse de transport des contenants (10).

6. Dispositif selon l'une quelconque des revendications 1 à 4, **caractérisé par** une source lumineuse (100) et une caméra à lignes (101), qui sont disposées sur les côtés opposés du premier transporteur (12) avant le point de sélection (16), la vitesse de transport des contenants (10) étant calculée à partir des signaux générés par la caméra à lignes (101).

7. Dispositif selon l'une quelconque des revendications 1 à 6, **caractérisé par** un système disposé sur le premier transporteur (12) pour amortir les fluctuations de la pression dynamique qui est générée par la sélection d'un ou plusieurs contenants (10).

8. Vérin (60) avec un piston (64) pouvant être déployé sur commande, avec un raccordement sur chaque extrémité du cylindre (60) pour l'introduction du fluide sous pression et pour la déviation du fluide, **caractérisé par** un grand nombre d'autres raccordements, qui sont répartis sur la longueur du cylindre (60) et peuvent être fermés individuellement.

9. Vérin (70) avec un piston (74) pouvant coulisser à l'intérieur et un raccordement sur chaque extrémité du cylindre pour l'arrivée du fluide sous pression et la déviation du fluide, **caractérisé par** au moins un clapet antiretour à étranglement (78) avec une conduite de bypass agencée de façon parallèle, la purge pouvant être effectuée par une vanne de commande (80) soit au moyen du clapet antiretour à étranglement (78) soit par la conduite de bypass des vérins (70).
